# EUROPEAN PATENT APPLICATION

(11) **EP 2 259 036 A1**
(43) Date of publication of application: **08.12.2010**
(21) Application number: 09251435.5
(22) Date of filing: 29.05.2009
(51) Int. Cl.: G01J 5/04, G01J 5/08

(54) **Heat source sensor**

(71) Applicant: BRITISH TELECOMMUNICATIONS public limited company, London EC1A 7AJ (GB)
(72) Inventor: The designation of the inventor has not yet been filed
(74) Representative: Geffen, Nigel Paul

(57) **Abstract**

Heat source detection apparatus comprising
- a housing including a visually-permeable portion and a visually-impermeable portion,
- a sensor facing outwardly from within the housing, configured in use to project a field of view through the visually-permeable portion of the housing, and
- moving means configured to move the sensor and the housing relative to each other such that in use, the sensor faces the visually-permeable and the visually-impermeable portions of the housing in succession.

## Description

This invention relates to apparatus, systems and methods related to heat source sensors.

Various types of detectors and sensors which are based on the detection of heat sources are known. For example, heat and motion sensors are used in the security industry to detect the existence of excessive heat which might indicate actual or potential fire hazard. They are also used to detect the existence of heat sources such warm-blooded human intruders in commercial or residential premises. Other areas of application include the healthcare industry such as the growing telecare sector, in which patients and service users are monitored for their well-being in their own homes, so that any abnormal behaviour indicative of a problem may be identified by care-providers from a remote location.

Passive infra-red (PIR) sensors are essentially motion detectors that respond to heat sources. They are a mature technology and so its deployment is relatively inexpensive. They operate by responding to the heat emanated by a heat source (such as a human or warm blooded animal) moving across their "field of view", which is the spatial angular range within which infra-red radiation from a heat source may be received for detection by the sensor. Generally, the field of view projects outwardly from the detector, so that infra-red radiation (i.e., heat signals) from a heat source within the field may be captured. In the main, PIR sensors have a single wide static field of view within which heat sources must move to trigger the sensor. A stationary heat source within the field of view will not trigger the sensor. Another restriction is that the heat source must be within the operating range of the sensor. For example, a PIR sensor sited in the corner of a room against a vertical wall and close to the ceiling can monitor the room over a 90 degree field of view, out to a distance limited by its operating range, typically out to 10 meters for a PIR sensor of the kind typically used in a residential setting (PIR sensors for industrial applications may have a greater range).

As noted above, a heat source must be moving to be detected by conventional PIR sensors. Sources which are stationary or moving very slowly (e.g. anything significantly below a walking pace) cannot be detected. This is because the detector component is predominantly sensitive to changes in the intensity of the heat signal. An essentially stationary object will not generate the necessary change in the heat signal for detection within the static field of vision. Often, even moving heat sources radiate a heat signal of substantially constant intensity. Hence conventional PIR sensors will typically include a specifically designed Fresnel lens placed over the detector, so that the intensity of detected heat signal as received by the detector is made to fluctuate as the heat source moves across the field of view of the lens. These fluctuations are caused by the multiple regions of strong and weak focus (known as lobes) created by the Fresnel lens. It is these changes which are detected by the detector, hence PIR sensors detect changes in heat signals moving across its field of view.

Conventional PIR sensors are also incapable of tracking a heat source across the room and locating it in a three-dimensional space, and neither can it distinguish between there being one or several heat sources all moving within the room. This is because of the use of a single static field of view which has no means to sectorise the filed of view. All they are capable of is detection of the existence of a moving heat signature within the room, regardless of where that signature is located in the room, or whether it is a single heat signature or multiple signatures.

Technologies capable of detection and tracking one or multiple heat sources within a room are known. Thermal imaging techniques operate on a completely different principle from that used in PIR sensors. In essence they are a thermal imaging video camera, which processes a received visual signal using complex image analysis to obtain the desired information about the detected heat sources in the room. Consequently these devices are considerably more expensive than PIR sensors, which prohibitive cost discourages widespread adoption.

Using the telecare implementation as an example, it may be necessary to deploy a high number of such devices, e.g. several in each room of a service user's house. It would be excessively costly to deploy significant numbers of expensive thermal imaging sensors. Nonetheless it is important to be able to detect the presence of a service user within a particular room even if he is not moving sufficiently for detection by conventional PIR sensors. Each inaccurate sensing by a PIR device (e.g. that the service user is not in the room when he actually is) causes an erroneous profile to be generated of the service user in a telecare system, and because such systems generally use adaptive threshold detection to ascertain a change in normal behaviour, that erroneous profile in turn will generate false alarms. Such alarms, when activated correctly, are raised when abnormal behaviour is detected (e.g. when no movement by the service user has been sensed for a pre-determined time period, suggesting e.g. that he may have fallen down and is unable to get up again), and may be followed up by sending help, for example from a care worker. Thus, the capacity to accurately and correctly detect the service user is indeed present in the room and is not needing attention, perhaps reading a book or sleeping, would be a significant benefit both the service user and the telecare service provider

In addition to a capacity to identify unmoving heat sources in a relatively simple way, the following further PIR sensor functionalities would allow for the capture of more information about the subject (or object, as sensor technology is equally applied to machinery and the like) in greater detail allowing for greater subtlety in analysis e.g. within the context or environment of operation.
- capacity to detect more than one heat source - for example, several heat sources might be present in a typical room, including people, pets, fires and radiators, and hot running appliances such as a television;
- capacity to distinguish between heat sources, where there is more than one - in the above example room it would be vital for the purposes of a telecare service to be able to distinguish between the human heat sources and all the other sources;
- capacity to track movement of heat source(s) within the sensor's field of view - one of the most effective means to distinguish between human heat sources and all the others is to monitor and track their movements over time. The movement and behaviour of the human heat sources is often easily distinguishable from other heat source types, particularly the stationary ones such as a fire or television in the room. Furthermore, it is possible, through e.g. review of historical data, to distinguish between behaviour of a number of human heat sources e.g. between a particular telecare service user and any other person in the room, such as a family member, regular visitor or occasional care worker. With the telecare service user thus identified by use of e.g. a behavioural profile, the sensor data can be used to build up a behavioural pattern over time. This can be used to detect a change in that pattern, so that any abnormal behaviour may be a trigger to alert a telecare care worker;
- capacity to map location of heat source(s) within the environment - further to the above example, the ability to map and track the location of heat sources in three dimensions over time further aids the distinction between human and non human heat sources, and hence improves the accuracy of the sensor and minimises false alarms.

It would be desirable to address the above issues, to develop an inexpensive solution for monitoring the existence and movement of one or more heat sources within a defined space.

In a first aspect of the invention, there is provided a heat source detection apparatus comprising
- a housing including a visually-permeable portion and a visually-impermeable portion,
- a sensor facing outwardly from within the housing, configured in use to project a field of view through the visually-permeable portion of the housing, and
- moving means configured to move the sensor and the housing relative to each other such that in use, the sensor faces the visually-permeable and the visually-impermeable portions of the housing in succession.

The detection apparatus generates a field of view which will sense heat sources within its operational range, which will be then sent to and identified as a heat source by a detection component. Advantageously, stationary as well as moving heat sources may be detected using embodiments and implementations of the invention.

In a second aspect of the invention, there is provided a method of detecting a heat source detection apparatus comprising
- providing a housing including a visually-permeable portion and a visually-impermeable portion,
- using a sensor to project a field of view through the visually-permeable portion of the housing, and
- moving the sensor and the housing relative to each other so that the sensor faces the visually-permeable and the visually-impermeable portions of the housing in succession.

Among other aims and effects, this invention combines the low cost attributes of PIR technology with the scene resolving capabilities of thermal imaging.

Embodiments of the invention will now be described by way of example only with reference to the accompanying drawings in which:
Figures 1A and 1B are external views of a heat source sensor showing the window arrangements;
Figures 2A and 2B respectively depict alternative window arrangements of the sensor;
Figure 3 is a schematic cross-sectional view illustrating the operation of the sensor;
Figure 4 is a schematic cross-sectional view illustrating the operation of another embodiment of the sensor;
Figure 5 depicts the projection of fields of view from the sensor;
Figures 6A to 6C illustrate the sequence of fields of view projection during operation;
Figure 7A and 7B illustrate the effect of the vertical scanning action of the fields of view;
Figure 8 is a schematic diagram illustrating the vertical scanning action of a field of view across a number of windows; and
Figure 9 is a schematic cross-sectional view illustrating the operation of a further embodiment of the sensor.

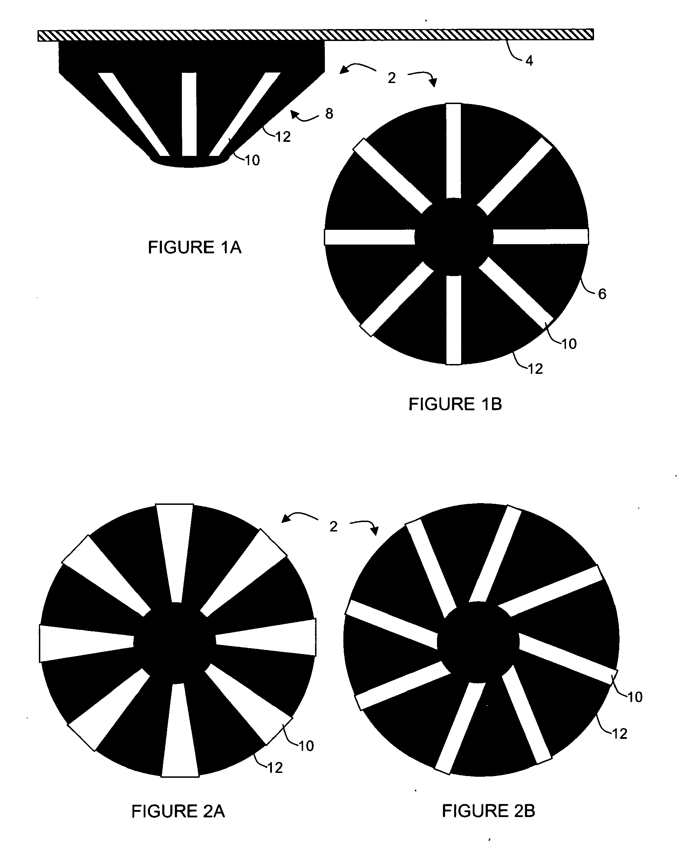

Figures 1A and 1B are two external views of an exemplary embodiment of a heat source sensor (2) according to the invention. Figure 1A shows the sensor installed at a central part of a ceiling (4) of e.g. domestic premises. In this example, it shall be assumed that the operating range/distance of the sensor is taken to reach the perimeter walls of the room so that any heat source in the premises is within detectable range.

### Sensor configuration

The sensor comprises a housing (6) which may be made of injection-moulded plastic. The housing includes an angled section (8) which surface faces downwardly in the direction of the premises, when the sensor is installed as shown in Figure 1A. More than one visually-permeable portion, such as translucent or transparent splits, apertures or strips (10), are disposed on the angled surface. These slits serve as windows which permit passage of emission wavelengths of a heat source into the sensing device. Typically, these centre on 10 microns over the range 5-15 microns for human heat signatures and those of warm blooded animals. The windows can be left uncovered, although in preferred embodiments it is covered with e.g. a clear or otherwise sufficiently transparent or translucent plastic material capable of allowing a heat source signal to pass through the housing. In a preferred embodiment, the transparent region is covered with a plastic material commonly used for Fresnel lenses area in conventional PIR sensors.

Thus the angled surface of the housing comprises, in preferred embodiments, alternating bands of substantially a visually-impermeable, or opaque (12) and visually-permeable (10) regions. This can be seen in the exemplary embodiment shown in Figure 1B which is a plan view of the downwardly-facing surface showing eight window sections which are substantially elongated strips or panels.

Although the particular configuration adopted will affect the specific manner of operation of the sensor, the specific geometry and number of the transparent windows can take various forms to accommodate particular operational requirements. Two examples of alternative window arrangements are shown in Figures 2A and 2B. The skilled person would appreciate that the transparent and opaque regions need not alternate in a regular fashion, nor that a particular number of transparent regions be disposed within the housing. For example, it is possible to use a single window within the housing, although sensing capacity of the sensor will be limited, in being able to only detect heat sources within the limited field of view of the one window, especially where the window is configured to be relatively narrow. Widening the field of view is one response to this problem, but this may have the effect of reducing the ability of the sensor to detect stationary heat sources.

In a preferred embodiment therefore, the window or windows are configured so that they are relatively narrow (as shown in the figures), which ensures that the heat signal reaches the detected only momentarily, which goes towards the detection of stationary, as well as moving, heat sources within the field of view of the sensor. In operation, each window individually has a relatively narrow field of view, but collectively enable the sensor as a whole a wide field of view. The skilled person would appreciate that the effect obtaining a momentary field of view through the window or windows can be obtained not only by rotating the mirror on its spindle (19) within the housing, but also by other methods such as rotating the housing (relative to the mirror), or causing the mirrored surface to turn within an arc, or to tilt vertically, or to slide along a straight line, and so on.

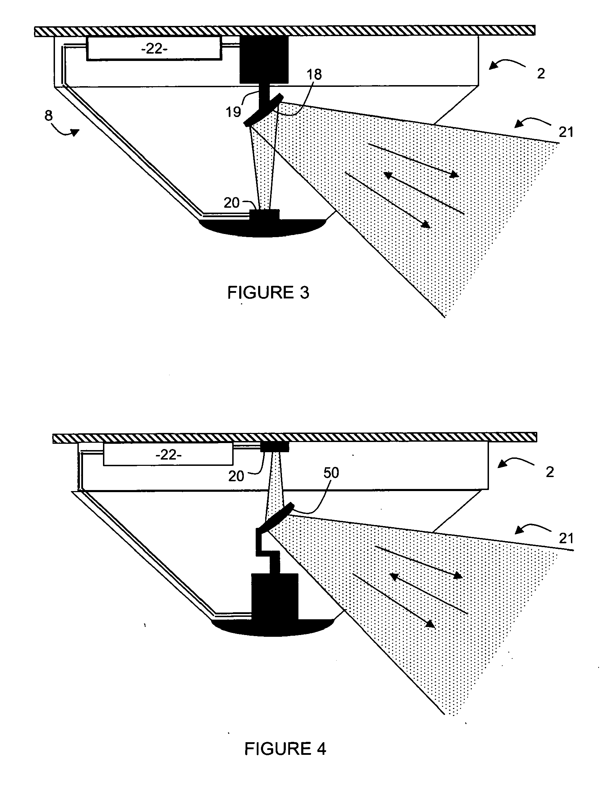

Figure 3 is a cutaway view of an exemplary embodiment of the heat source sensor (2) showing its components during operation. A reflective surface in the form of an angled mirror (18) is held in place within the housing by way of a spindle. When the sensor is 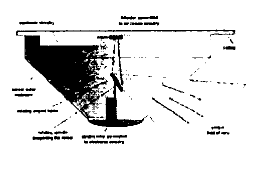 fixed in place on the ceiling, the mirror projects the field of view (21) downwardly and outwardly from the ceiling. The reflective surface of the mirror faces the interior of the angled section (8) of the housing so that its reflective surface projects a field of view towards the interior of the angled section of the housing when the mirror faces an opaque section, and outwardly beyond the housing (as depicted by the arrows "X") when the mirror faces a transparent section, as depicted in Figure 3. The reflective surface can be any shape e.g. circular or square, with a flat or slightly curved surface. The exact configuration depends on the desired geometry of the field of view of the detector projected on to the inner wall of the housing. The one critical aspect of the mirror is that its surface should be reflective preferably at the wavelengths of the heat signal, typically centred on 10 micron over a range 5-15 micron as mentioned above.

In preferred implementations, the dimensions of the mirror are such that the image of the detector which is projected on to the inner wall of the housing is only slightly wider than the width of each window. That ensures that the window is fully occupied by the view from the detector, and conversely that the surface of the detector is fully or predominantly illuminated by the heat signal from the room. The operational efficiency of such an arrangement is high. Of course this aspect is not essential to the working of the invention, but if the dimensions of the mirror are such that only a portion of each is occupied (or conversely the image of the detector projected on to the inner wall of the housing is much larger than each window), then in either case the operational efficiency of the sensor will be reduced. In the event that the image of the detector projected on to the inner wall of the housing spills over to the opaque regions, the opacity of these regions could be made sufficiently high to prevent any substantial leakage. It would be noted however, that operational limits of tolerance of say 10%, would not impact noticeably on the efficiency of the sensor.

In use, the spindle is powered by an electric rotor so that the mirror is configured for rotation. The rotor can take the form of cheaply- and widely-available motors used in compact disc (CD) players or the like, since the mirror and spindle are low mass elements and a desired speed of rotation is similar to that used for playing of music CDs (typically 200 rpm for tracks located at the outer edge of the CD, increasing to 500rpm for tracks located at the centre). Circuitry similar to that in a CD player could be employed to control or stabilise the speed of operation of the rotor.

In preferred embodiments, a detector (20) is provided within the housing, which is operatively connected to electronic circuitry (22). Conveniently, the detector may be of the same type used in conventional PIR sensors, of which there is a variety dependent on device type. Semiconductor photodetectors are typically fabricated from cadmium mercury telluride which operate by incoming photons being absorbed into the lattice structure and generating a current. Pyroelectric sensors employ a much simpler crystalline structure and operate by generating a surface electric charge when exposed to heat. These, or any other suitable detector type may be deployed in this invention for the detection of the heat source signal.

The skilled person would appreciate that while it is not necessary for the detector component to be included within the housing (as this may be carried out e.g. using a separate component located outside of the housing), this is a preferred implementation allowing for a neat and relatively small footprint suitable for use within residential premises.

In an alternative embodiment the relative positions of the mirror/rotor assembly (18) and the detector (20) shown in Figure 3 can be reversed without affecting the operating principle of the invention.

Figure 4 depicts an alternative implementation of the invention. Here, an arrangement (50) comprising a Fresnel lens and hologram is used to enable the sensor to operate in a transmissive mode (i.e. rather than using a reflection as is the case with the embodiment of the invention shown in Figure 3). A slightly different component layout is required within the sensor enclosure, and a different means of supporting the lens/hologram when rotating.

The mirror-based embodiment shown in Figure 3 potentially incurs a lower rate of attenuation in the field of view by virtue of signals merely being reflected at the surface, compared to the sensor of Figure 4, as transmissions through a lens or hologram will inevitably incur some attenuation. Conversely, the Fresnel lens or 2D hologram used in the sensor of Figure 4 may each afford a slightly better control over the geometry of the field of view of the detector projected on to the inner surface of the sensor enclosure.

### Sensor operation

In operation, a field of view (21) is projected by the mirror through a transparent window in the sensor housing (whether the mirror is rotating or not). As in the prior art, a heat source moving within the projected field of view and within the operating range is detected by reception of the heat source signal at the mirror surface (indicated by the arrow "Y"), which is then onwardly-transmitted and received at the detector (20).

### Detection of heat source presence

Aspects of the invention permit the detection of heat sources within the operating range of the sensor.

As the mirror rotates, a field of view is projected through 360 degrees, enabling the sensor to monitor the locality all around it. This can be contrasted with the static and limited field of view of conventional PIR sensors. The skilled person would however appreciate that the mirror need not go through a full rotation, and that, as noted elsewhere, the scope of the invention would include rotating or turning the mirror for less than 360 degrees: for example, a sensor designed for deployment against the corner of a room may include a mirror arranged to sweep from side to side or back and forth.

Embodiments of the invention further allow for detection of the presence of a stationary heat source. By deploying a moving field of view, generated by rotating the angled mirror about its spindle, the signal from the heat source received at the detector is always transitory, and so its intensity differs slightly over time. This produces the required change in the intensity of the heat signal for the detector to work upon. As noted above, PIR detectors are generally insensitive to a constant intensity of heat signal, but respond to changes in the signal. The heat source need no longer be moving to be detected, as was required in conventional systems and methods; instead, the detectable change is generated by the moving of the field of view.

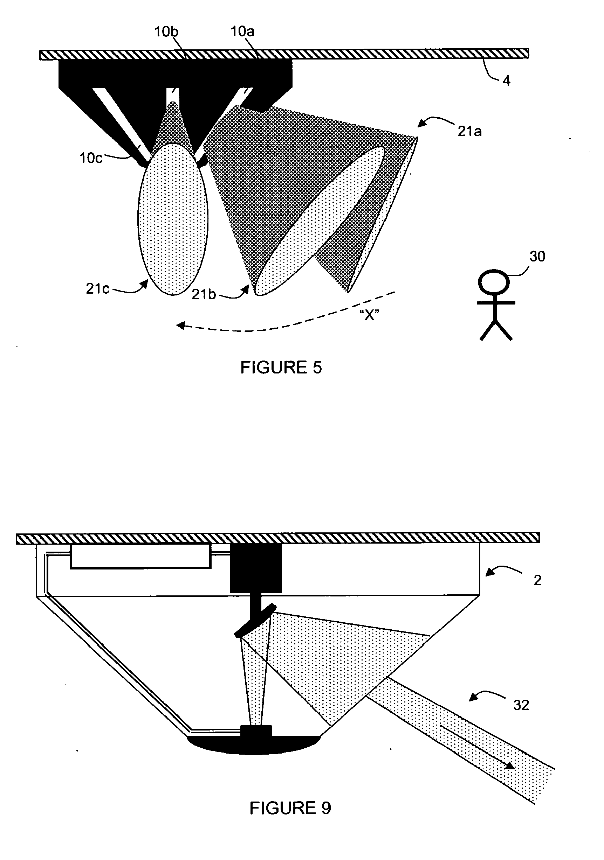

This capacity to detect very slow-moving or unmoving heat sources is augmented by sweeping the field of view across alternating bands of opaque and transparent regions in succession, as illustrated by e.g. arrow "X" in Figure 5. Instead of a continuous view projected by the mirror as it sweeps around, a series of discrete fields of view of the type shown in Figure 4 are generated. Each field of view (21 a, 21 b, 21 c) is generated in turn, as the reflective surface of the mirror is rotated (in the direction of arrow "Z") to face the respective transparent window (10a, 10b, 10c) in the particular instance. Each "view" of the heat signal (30) within each field of view is a slightly different "snapshot" of the heat source, owing to the origins, angle, etc. of each field of view relative to the location of the heat source (30).

By "sampling" the signal of the heat source over time using discrete fields of view, a more positive indication of the presence (or absence) of the heat source can be obtained. This is because any change in the heat signature would be received as a step changes rather than a gradual smooth change (as would be the case in deployment of a continuous moving field of view), which is easier to detect and provides a more definitive indication of change.

For example, if the rotation rate of the mirror is 300 rpm (i.e. 5 revolutions per second), each of the eight discrete fields of view "sees" a heat source(s) 5 times per second, which rate is comfortably within the operating specification of all the technologies involved. The capacity to detect very slow moving or unmoving heat sources enables its use to determine the presence of anything from pets, to a central heating radiator, etc. There is also potential to detect fire, and the conditions leading up to one.

The sensor of the invention is of course also capable of detecting moving heat sources, as the moving field of view can as easily pick up such signals for transmission to the detector.

### Determination of heat source location

In further aspects of the invention, the location of the heat source within the three-dimensional space within the monitored premises can be determined. As may be expected, there is considerable advantage, particularly in telecare and personal security applications, in being able to determine where individual heat sources lie within a given space.

Discovering the location of the heat source in terms of cardinal directions (e.g. north) relative to the sensor can be performed by synchronising a heat signal received by the detector to the instantaneous angular position of the mirror (through 360 degrees). Knowledge of the rotation speed of the mirror permits determination of which of the e.g. eight discrete fields of view contains a heat source at a particular time, which in turn identifies the direction the particular field of view was pointing at. The calculations required for this task can be carried out by a processor or electronic circuitry (22).

Advantageously, two or more sensors of the invention may be deployed simultaneously within a space to enable determination of the exact position of a heat source. In one possible implementation, the sensors may be interconnected so that the data from their sensors and their angular position could be combined or fused computationally thus to create a three-dimensional view along virtual x-y-z axes within the room.

Determining the location of the heat source in terms of its height within the room is less easily carried out, and indeed cannot be performed by the embodiment of the sensor shown in Figures 1 to 4. As depicted in Figures 3 to 5, the fields of view (21) projected from a sensor housing such as that shown in Figure 1, have a configuration which extends the full vertical extent of the elongated windows through which the field of view passes (10 in e.g. Figure 1). A field of view having such a configuration covers potentially the entire height of the room in which the sensor is installed, from ceiling to floor. Thus a heat source may be detected at any height within the room, however is location in a vertical direction cannot be determined, only that is lies somewhere between floor and ceiling.

The following aspects of the invention are directed to the determination of the possible location of the heat source in terms of its height, or vertical profile, within the monitored premises. These aspects also allow the identification of one or more than one heat source distributed vertically with respect to the field of view of the sensor.

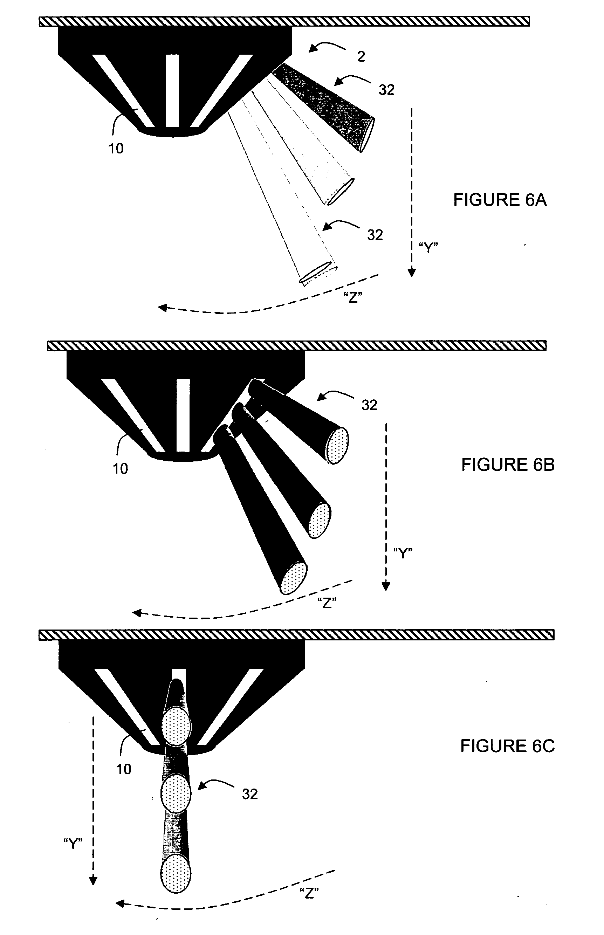

In, essence, the method involves projecting a smaller field of view from the sensor housing and causing it to scan along the vertical profile of each relatively narrow window in turn. In other words, the field of view is projected vertically (along each window) as well as horizontally (at each window in turn). This effect is depicted in Figures 6A to 6C, wherein a relatively small or "short" field of view (32, compare with the height of the field of view 21 of e.g. Figure 3) is used. In the implementation shown in Figure 6A, the three depictions of fields of view (32) are actually a single projection moving continuously (as depicted by the arrow "Y") in a vertical plane but shown for illustrative purposes as a snapshot in three positions (in this case sweeping from top to bottom in a continuous scan). After the field of view projection along the vertical plane has completed at one window (10), the process starts again at the next window (10b, Figure 6B), and again at the next window (10c, Figure 6C), and so on in the rotary direction of arrow "Z".

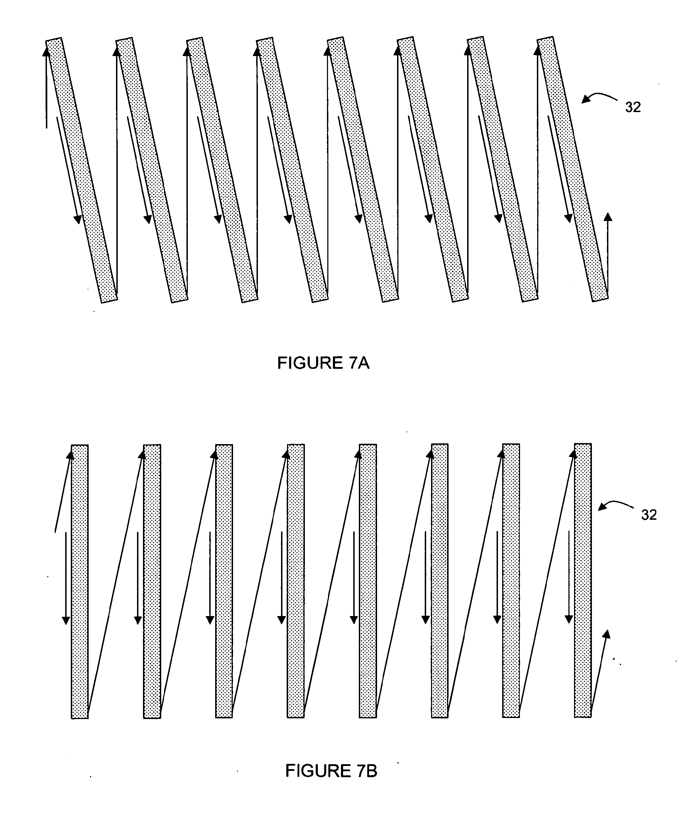

In effect the combined action of the vertical scan within each window and the cyclical repetition of that process around the sensor enclosure through rotation, means that the monitored room is being scanned on a "raster" basis. The arrows in Figure 7A illustrates the geometry of the scanning field of view being projected outwards from the sensor: the scanning action resembles the outline of a sawtooth, where the geometry of the raster is slightly inclined from the vertical, with vertical "flybacks". The use of the term "vertical" in connection with this aspect of the invention therefore is not restricted to true verticals projecting upwards from the ground, but includes all scanning action, at an angle or otherwise, which would cover a vertical field of view of the surrounds of the sensor in total or in part.

In this case, the field of view of the detector projected against the inner surface of the enclosure is slightly inclined from the vertical while the transparent strips are vertical (see e.g. Figures 1A, 1B, 2A). Figure 7B depicts an alternative scanning method, wherein the geometry of the raster is vertical while the flybacks are inclined: in this case, the field of view of the detector projected against the inner surface of the enclosure is vertical while the transparent strips are inclined at a slight angle (see e.g. Figure 2B).

There are a number of ways to obtain the modified scanning action. One method is to provide the mirror with the capacity to move its reflective surface in the required manner to obtain the desired effect.

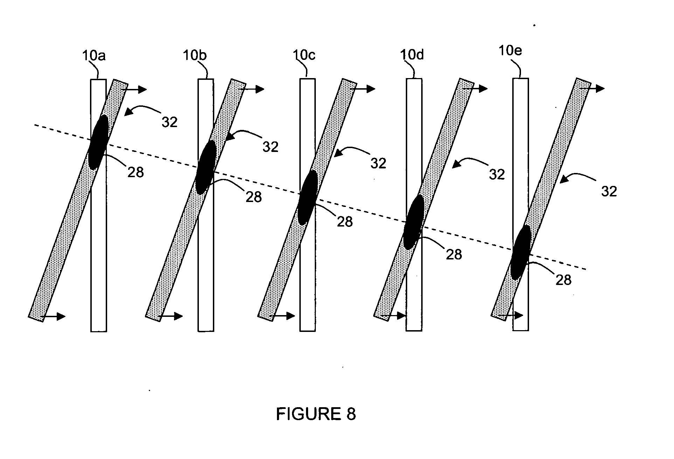

A preferred method is illustrated in Figure 8, which depicts a number of windows (10a to 10e). The same one field of view (32) of the detector, in this example inclined at a slight angle from the vertical, is depicted five times passing across each of the five windows which are inclined vertically. The field of view produced by the rotating mirror (not shown) in this embodiment, is inclined or angled from the vertical (e.g. by 10 degrees). In operation, the angled field of view passes from the upper section through to the lower section of each window in turn: from windows 10a to 10e. The effect of this is that the section (28) of the field of view which projects outwards beyond the sensor housing moves or scans downwards along each window in turn. If the field of view produced by the rotating mirror is inclined in the opposite direction from the vertical (e.g., by -10 degrees) the section (28) of the field of view which projects outwards beyond the sensor housing now scans upwards along each window in turn. The outcome is essentially the same in the reverse set up, where the field of view of the detector is vertical and the five windows are slightly inclined.

Figure 9 is a cross-sectional depiction of a sensor configured for the modified field of view scanning action. It can be noted that it is almost identical to the implementation depicted in Figure 3, save that the field of view projected outwards from the sensor enclosure is reduced in height as it does not fill the entire available vertical extent of a window. The rotating angled mirror of this sensing device is angled to provide the angled field of view (e.g. 10 degrees from the vertical) depicted in Figure 8. The geometry of the field of view of the detector projected on to the inner surface of the sensor enclosure is then also rectangular and slightly inclined, as shown in Figure 8.

The skilled person would appreciate that it is possible to arrange the sensor so that the action of the field of view scans upwardly, and in the opposite rotational direction. Alternative methods of obtaining the combined vertical and rotational action of the field of view could include sweeping the field of view downwards along a window, rotating the mirror to arrive at the next window, sweeping the field of view upwards along that window, and so on to imitate the outline of a square wave.

Through repetition and over time, a map can be built up of the location of any and all heat sources (stationary or moving, living or otherwise) within the operating range of the sensor within the room, which is refreshed continually as long as the sensor is in operation.

The apparatus, methods and configurations as described above and in the drawings are for ease of description only and not meant to restrict the apparatus or methods to a particular arrangement or process in use. As noted above, the methods and apparatus described are merely exemplary and the skilled person would appreciate that a number of alternatives exist to implement aspects of the invention. Embodiments of the invention may be also be used in a wide variety of applications and contexts, wherever heat source detection may be required, from the remote monitoring of the wellbeing of patients, to the factory shop floor or assembly line where machines may overheat. It will also be apparent to the skilled person that various sequences and permutations on the methods and apparatus described are possible within the scope of this invention as disclosed.

## Claims

1. Heat source detection apparatus comprising
- a housing including a visually-permeable portion and a visually-impermeable portion,
- a sensor facing outwardly from within the housing, configured in use to project a field of view through the visually-permeable portion of the housing, and
- moving means configured to move the sensor and the housing relative to each other such that in use, the sensor faces the visually-permeable and the visually-impermeable portions of the housing in succession.

2. Heat source detection apparatus according to claim 1 wherein the sensor comprises a reflective surface, and wherein in use the sensor transmits a reflection of a sensed heat source signal.

3. Heat source detection apparatus according to claim 1 wherein the sensor comprises a Fresnel lens and hologram arrangement, and wherein in use the sensor transmits a sensed heat source signal.

4. Heat source detection apparatus according to any preceding claim further including a detector arranged in use to receive from the sensor, a reflection indicative of the heat source signal, or a transmission of the heat source signal.

5. Heat source detection apparatus according to any preceding claim wherein the housing includes a plurality of visually-permeable portions and a plurality of visually-impermeable portions.

6. Heat source detection apparatus according to any preceding claim wherein the visually-impermeable portion comprises a window covered by a visually-permeable plastic material permitting passage of emission wavelengths from a heat source of substantially between 5 to 10 microns.

7. Heat source detection apparatus according to any preceding claim wherein the visually-permeable portion or portions is narrow relative to its height.

8. Heat source detection apparatus according to any preceding claim wherein the moving means is configured to cause the sensor to rotate within the housing during use.

9. Heat source detection apparatus according to any preceding claim wherein the sensor face direction is synchronised with detection of a heat source signal.

10. Heat source detection apparatus according to any preceding claim wherein the moving means is further configured to move the sensor and the housing relative to each other such that in use, the sensor is caused to scan along the visually-permeable portion of the housing in a substantially vertical direction.

11. A method of detecting a heat source detection apparatus comprising
- providing a housing including a visually-permeable portion and a visually-impermeable portion,
- using a sensor to project a field of view through the visually-permeable portion of the housing, and
- moving the sensor and the housing relative to each other so that the sensor faces the visually-permeable and the visually-impermeable portions of the housing in succession.

12. A method according to claim 11 further including transmitting a reflection indicative of the heat source signal, or a transmission of the heat source signal to a detector.

13. A method according to claim 11 or claim 12 wherein movement of the sensor and the visually-permeable portion relative to each other creates a plurality of different views of a heat source.

14. A method according to any one of claims 11 to 13 wherein the sensor rotates within the housing.

15. A method according to any one of claims 11 to 14 wherein the field of view scans along the visually-permeable portion of the housing in a substantially vertical direction.
